# EUROPEAN PATENT SPECIFICATION

(11) **EP 4 066 782 B1**
(45) Date of publication and mention of the grant of the patent: **03.01.2024**
(21) Application number: 22161085.0
(22) Date of filing: 09.03.2022
(51) Int. Cl.: A61C 17/028

(54) **TANK TELESCOPIC ORAL CAVITY WASHING DEVICE**
TELESKOPISCHE BEHÄLTERVORRICHTUNG ZUM WASCHEN DER MUNDHÖHLE
DISPOSITIF TÉLESCOPIQUE DE LAVAGE DE CAVITÉ BUCCALE À RÉSERVOIR

(30) Priority: 31.03.2021 JP 2021062295
(43) Date of publication of application: 05.10.2022
(73) Proprietor: Panasonic Intellectual Property Management Co., Ltd., Osaka-shi, Osaka 540-6207 (JP)
(72) Inventor: Nagura, Shingo, Osaka-shi, Osaka (JP); Maegawa, Kazuya, Osaka-shi, Osaka (JP)
(74) Representative: Grünecker Patent- und Rechtsanwälte PartG mbB

(56) References cited:
- CN-A- 111 956 351
- JP-A- 2011 200 424

## Description

### BACKGROUND

### 1. Technical Field

The present disclosure relates to a tank telescopic oral cavity washing device.

### 2. Description of the Related Art

Conventionally, as a tank telescopic oral cavity washing device, there has been known a tank telescopic oral cavity washing device including a device body in which a pump has been built, and a tank that has a storage unit for storing liquid and slidably supports the device body (see PTL 1 and PTL 2). In the tank, a liquid supply hole through which liquid is injected into the storage unit is formed, and a liquid supply lid for openably closing the liquid supply hole is provided via a hinge.

### Citation List

### Patent Literature

PTL 1: Unexamined Japanese Patent Publication No. 2011-200424
PTL 2: CN 111 956 351 A

### SUMMARY

Meanwhile, in the tank telescopic oral cavity washing device as disclosed in PTL 1, an end portion of the liquid supply lid protrudes from a side surface of the tank in a state where the liquid supply lid is opened. Therefore, for example, in a case where the tank is dropped in the state where the liquid supply lid is opened, there is a possibility that the end portion of the liquid supply lid protruding from the side surface of the tank collides with a peripheral member, and the hinge holding the liquid supply lid is damaged.

The present disclosure has been made in view of such problems of the prior art. An object of the present invention is to provide a tank telescopic oral cavity washing device capable of suppressing breakage of a hinge holding a liquid supply lid.

The tank telescopic oral cavity washing device according to the invention is defined in appended claim 1. Preferred embodiments are defined in the dependent claims.

According to the present invention, it is possible to provide a tank telescopic oral cavity washing device capable of suppressing breakage of a hinge holding a liquid supply lid.

### BRIEF DESCRIPTION OF THE DRAWINGS

Fig. 1 is a schematic view of a tank telescopic oral cavity washing device according to the present exemplary embodiment;
Fig. 2 is a perspective view when a device body of the tank telescopic oral cavity washing device according to the present exemplary embodiment is pulled out from a tank;
Fig. 3 is a perspective view when the device body of the tank telescopic oral cavity washing device according to the present exemplary embodiment is accommodated in the tank;
Fig. 4 is a cross-sectional view when the device body of the tank telescopic oral cavity washing device according to the present exemplary embodiment is pulled out from the tank;
Fig. 5 is an enlarged view of a portion surrounded by broken line EN1 in Fig. 4;
Fig. 6 is a cross-sectional view when the device body of the tank telescopic oral cavity washing device according to the present exemplary embodiment is accommodated in the tank;
Fig. 7 is an enlarged view of a portion surrounded by broken line EN2 in Fig. 6;
Fig. 8 is a side view when a lock portion of the tank telescopic oral cavity washing device according to the present exemplary embodiment is engaged;
Fig. 9 is a side view when the lock portion of the tank telescopic oral cavity washing device according to the present exemplary embodiment is disengaged;
Fig. 10 is a side view when the device body of the tank telescopic oral cavity washing device according to the present exemplary embodiment is pulled out from the tank;
Fig. 11 is a perspective view of the device body of the tank telescopic oral cavity washing device according to the present exemplary embodiment;
Fig. 12 is a perspective view of the device body of the tank telescopic oral cavity washing device according to the present exemplary embodiment;
Fig. 13 is a perspective view of the tank of the tank telescopic oral cavity washing device according to the present exemplary embodiment;
Fig. 14 is a side view of the tank of the tank telescopic oral cavity washing device according to the present exemplary embodiment;
Fig. 15 is a cross-sectional view taken along line XV-XV of Fig. 14;
Fig. 16 is a cross-sectional view taken along line XVI-XVI of Fig. 14;
Fig. 17 is a side view of the tank when a liquid supply lid of the tank telescopic oral cavity washing device according to the present exemplary embodiment is opened;
Fig. 18 is a cross-sectional view taken along line XVIII-XVIII of Fig. 17;
Fig. 19 is a perspective view of a bottom wall of the tank telescopic oral cavity washing device according to the present exemplary embodiment;
Fig. 20 is a cross-sectional view of the bottom wall of the tank telescopic oral cavity washing device according to the present exemplary embodiment;
Fig. 21 is a cross-sectional view of the bottom wall of the tank telescopic oral cavity washing device according to the present exemplary embodiment;
Fig. 22 is a perspective view of the liquid supply lid of the tank telescopic oral cavity washing device according to the present exemplary embodiment; and
Fig. 23 is a plan view of the liquid supply lid of the tank telescopic oral cavity washing device according to the present exemplary embodiment.

### DETAILED DESCRIPTION

Hereinafter, an exemplary embodiment will be described in detail with reference to the drawings. However, unnecessarily detailed description is omitted in some cases. For example, a detailed description of already well-known matters or a redundant description of substantially the same configuration may be omitted.

Note that the attached drawings and the following description are provided for those skilled in the art to fully understand the present disclosure.

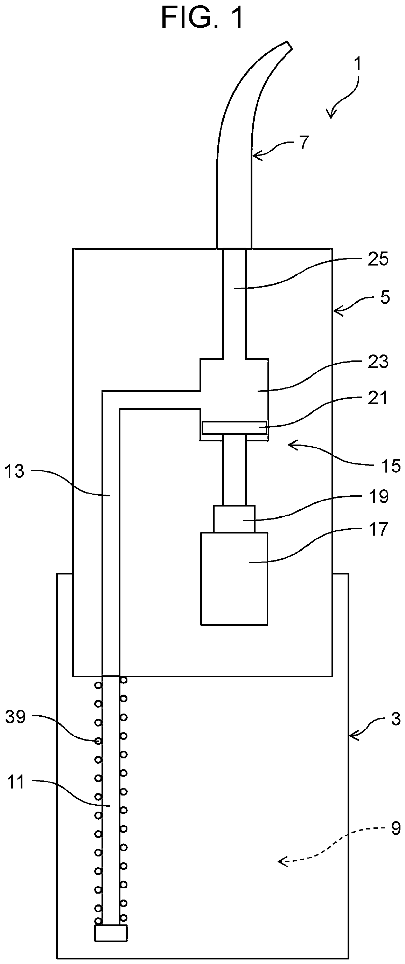

As illustrated in Fig. 1, tank telescopic oral cavity washing device 1 according to the present exemplary embodiment includes tank 3, device body 5, and nozzle 7.

Tank 3 is formed in a bottomed tubular shape. The inside of tank 3 is, for example, storage unit 9 that stores liquid (hereinafter, water) such as water. In storage unit 9, device body 5 is supported slidably in a length direction (hereinafter, referred to as a height direction.). Storage unit 9 accommodates device body 5 when tank telescopic oral cavity washing device 1 is not used. When tank telescopic oral cavity washing device 1 is used, device body 5 is pulled out from storage unit 9. In this case, water has been supplied to storage unit 9 of tank 3.

Device body 5 is formed in a tubular shape in which both end sides in the height direction are closed. Device body 5 is provided with tube 11 disposed in storage unit 9 of tank 3. A filter (not illustrated) for removing foreign substances mixed in the water stored in storage unit 9 is provided at a first end of tube 11. A second end of tube 11 communicates with suction path 13 provided inside device body 5. Suction path 13 communicates with pump 15 built in device body 5, and supplies to pump 15 water in tank 3 sucked up by tube 11 by driving of pump 15.

Pump 15 includes motor 17, cam 19, piston 21, and pump chamber 23. Motor 17 is driven by supply of electric power from a rechargeable battery (not illustrated) accommodated inside device body 5. Cam 19 converts the rotation of motor 17 into an axial operating force. Piston 21 is reciprocated along the height direction of device body 5 by the axial operating force converted by cam 19. An end portion of piston 21 is disposed in pump chamber 23, and a volume of pump chamber 23 changes due to the reciprocating motion of piston 21. Pump chamber 23 communicates with suction path 13 and discharge path 25 provided inside device body 5. Note that a suction valve (not illustrated) is provided between pump chamber 23 and suction path 13, and a discharge valve (not illustrated) is provided between pump chamber 23 and discharge path 25.

When piston 21 is moved in a direction of increasing the volume of pump chamber 23 by driving of motor 17, pump 15 causes water in tank 3 to flow into pump chamber 23 via tube 11 and suction path 13. The water flowing into pump chamber 23 is discharged to nozzle 7 via discharge path 25 when piston 21 is moved in a direction of reducing the volume of pump chamber 23 by the driving of motor 17.

Nozzle 7 is formed in a hollow elongated shape, and is detachable from device body 5. The inside of nozzle 7 communicates with discharge path 25 in a state of being attached to device body 5. Nozzle 7 jets the water flowing out of discharge path 25 from the tip thereof.

When such tank telescopic oral cavity washing device 1 is not used, nozzle 7 is removed from device body 5, and device body 5 is pushed into tank 3 and stored in tank 3. In use of tank telescopic oral cavity washing device 1, device body 5 is pulled out from tank 3, and nozzle 7 is attached to device body 5. Details of tank telescopic oral cavity washing device 1 will be described below with reference to Figs. 1 to 23.

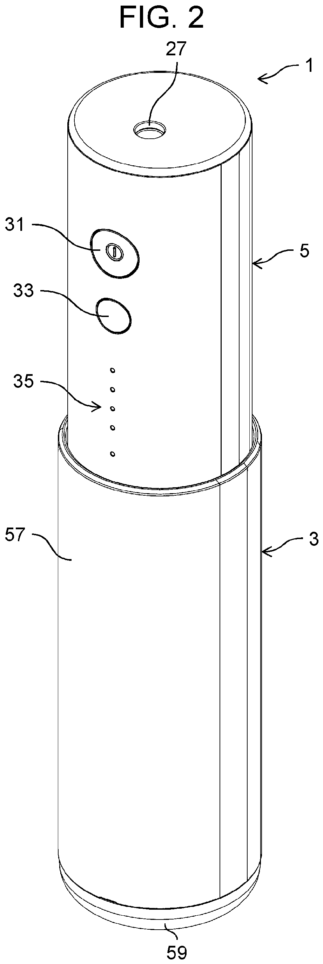

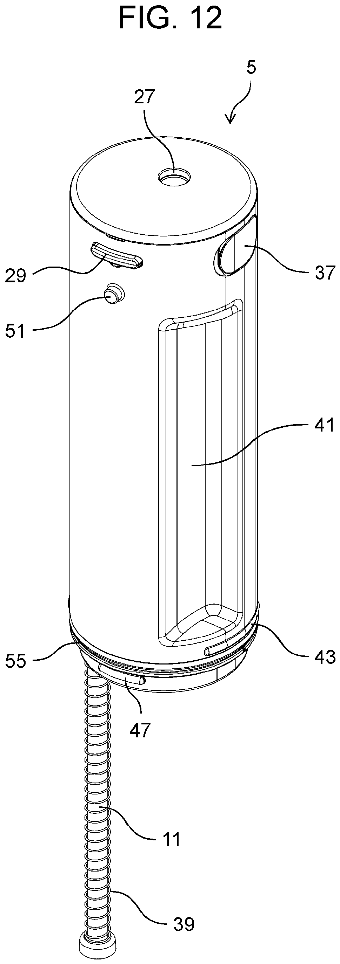

As illustrated in Figs. 1 to 12, device body 5 is formed in a tubular shape in which both end sides in the height direction are closed. Device body 5 has a cross-sectional shape formed in a perfect circle so as to be rotatable relative to tank 3. As illustrated in Figs. 2, 3, 11, and 12, nozzle mounting portion 27 on which nozzle 7 is detachably disposed is provided on an upper surface of device body 5. An end portion of nozzle 7 is inserted into nozzle mounting portion 27, and an engaging portion (not illustrated) provided inside of nozzle mounting portion 27 is engaged with an engaged portion (not illustrated) of the end portion of nozzle 7 to hold a mounted state of nozzle 7. When button 29 (see Fig. 12) provided at an upper part of a side surface of device body 5 is pressed, nozzle 7 mounted on nozzle mounting portion 27 can be removed from device body 5 by disengaging the engaging portion from the engaged portion.

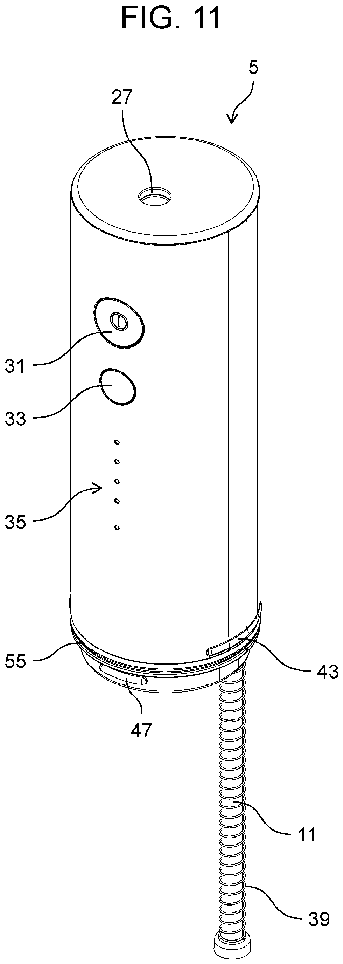

As illustrated in Figs. 2 and 11, power supply switch 31 for starting or stopping tank telescopic oral cavity washing device 1 is provided on the side surface of device body 5. Level selection switch 33 that switches output of motor 17 of pump 15 and switches discharge strength of water from nozzle 7 is provided below power supply switch 31 on the side surface of device body 5. Display lamp 35 that displays an ON/OFF state of power supply switch 31, a selection level of level selection switch 33, and the like is provided below level selection switch 33 on the side surface of device body 5. As illustrated in Fig. 12, lid 37 for protecting a charging connector of a rechargeable battery built in device body 5 is provided on the upper part of the side surface of device body 5 at a position different from display lamp 35 in the circumferential direction.

As illustrated in Figs. 1, 4, 11, and 12, tube 11 communicated with suction path 13 is integrally attached to a lower surface of device body 5. Tube 11 has a length enough to reach a bottom of tank 3 when device body 5 is pulled out from tank 3 (see Fig. 2). Tube 11 is accommodated in tank 3 in a state of being wound a plurality of times while device body 5 is accommodated in tank 3. Coil spring 39 that holds an attitude extending in a length direction of tube 11 is disposed around tube 11. By disposing coil spring 39, tube 11 can be wound without being bent when device body 5 is accommodated in tank 3, and tube 11 can be neatly accommodated in tank 3. In addition, by disposing coil spring 39, when device body 5 is pulled out from tank 3, tube 11 can be neatly extended from a wound state.

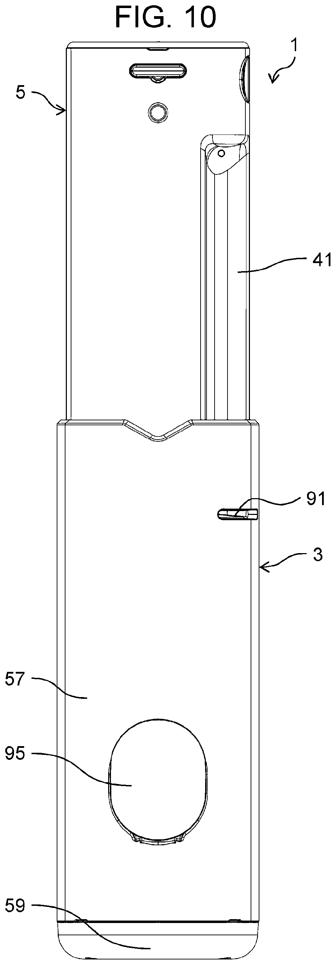

As illustrated in Figs. 10 and 12, nozzle accommodating portion 41 is provided on the side surface of device body 5. Nozzle accommodating portion 41 is formed in a groove shape capable of accommodating nozzle 7, and extends in the height direction of device body 5. Nozzle 7 detached from device body 5 is accommodated in nozzle accommodating portion 41. By providing nozzle accommodating portion 41 in device body 5, nozzle 7 detached from device body 5 can be handled together with device body 5. Therefore, it is not necessary to manage nozzle 7 detached from device body 5 separately from device body 5, and nozzle 7 can be easily managed.

As illustrated in Figs. 11 and 12, pull-out projection 43 protruding from the side surface of device body 5 is provided at a lower part of the side surface of device body 5. Pull-out projection 43 extends in the circumferential direction of device body 5. A plurality of (here, two) pull-out projections 43 are provided in the circumferential direction of the side surface of device body 5. Pull-out projection 43 constitutes holding portion 45 that holds device body 5 in tank 3 when device body 5 is pulled out from tank 3.

Accommodating projection 47 protruding from the side surface of device body 5 is provided below pull-out projection 43 on the side surface of device body 5. Accommodating projection 47 extends in the circumferential direction of device body 5. A plurality of (here, two) accommodating projections 47 are provided in the circumferential direction of the side surface of device body 5. Accommodating projection 47 constitutes lock portion 49 that holds device body 5 in tank 3 when device body 5 is accommodated in tank 3.

As illustrated in Fig. 12, marking projection 51 protruding from the side surface of device body 5 is provided at an upper part of the side surface of device body 5. Marking projection 51 constitutes marking portion 53 serving as a reference for positioning of lock portion 49 when device body 5 is accommodated in tank 3.

As illustrated in Figs. 11 and 12, at a lower part of device body 5, lower packing 55 as a sealing member is attached in close contact with a groove formed continuously in the circumferential direction on an outer peripheral surface of device body 5. An outer peripheral surface of lower packing 55 is in close contact with an inner peripheral surface of tank 3 in a state where device body 5 is attached to tank 3, and seals a gap between device body 5 and tank 3. Note that lower packing 55 is detachably attached to the groove of device body 5, and only lower packing 55 can be cleaned by detaching lower packing 55 from device body 5.

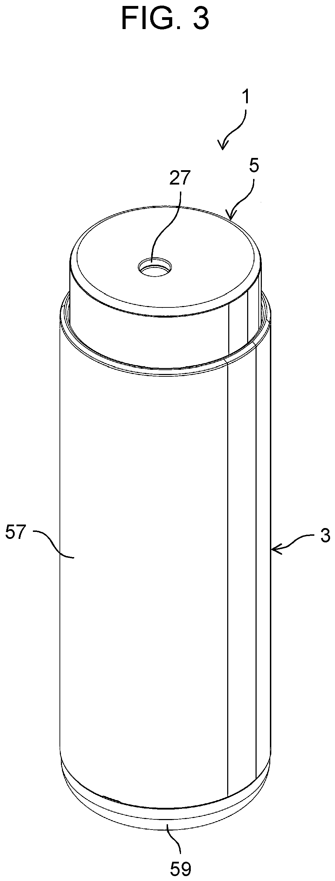

Such device body 5 is slidably supported by tank 3. As illustrated in Fig. 2, when tank telescopic oral cavity washing device 1 is used, device body 5 is pulled out from tank 3. On the other hand, as illustrated in Fig. 3, device body 5 is accommodated in tank 3 when tank telescopic oral cavity washing device 1 is not used.

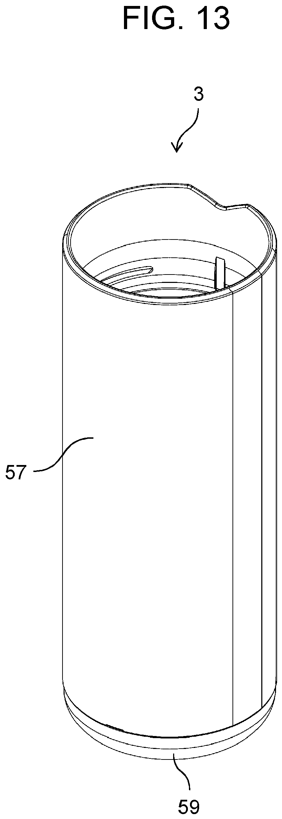

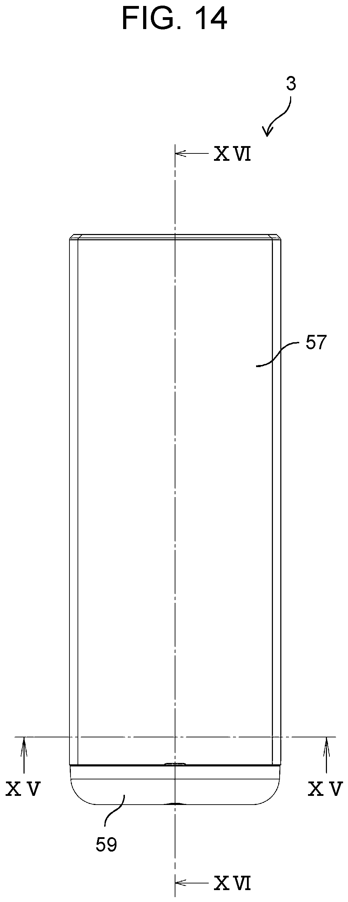

Tank 3 is formed of, for example, a polypropylene resin or the like so as to be cleaned by a dishwasher, and is made transparent or translucent in order to improve designability. As illustrated in Figs. 1 to 10 and Figs. 13 to 21, tank 3 is formed in a bottomed tubular shape in which one end side in the height direction is opened and the other end side is closed. The cross-sectional shape of tank 3 is a perfect circle such that device body 5 can rotate relatively. The inside of tank 3 is storage unit 9 that stores water. Storage unit 9 supports device body 5 slidably in the height direction. Storage unit 9 can accommodate a part other than an upper surface side of device body 5. As representatively illustrated in Figs. 13 and 14, tank 3 includes tubular body 57 and bottom wall 59.

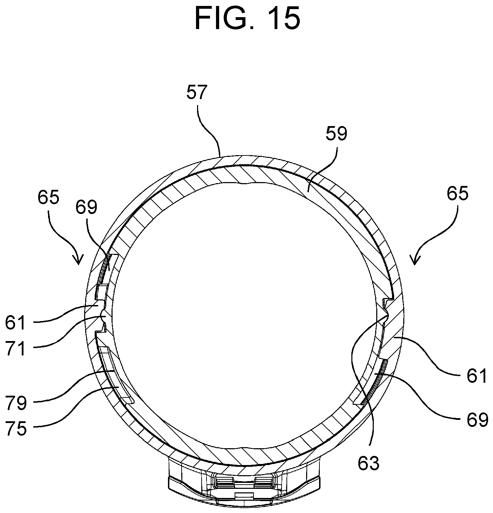

Tubular body 57 constitutes a peripheral wall of tank 3 and constitutes most of storage unit 9. As illustrated in Fig. 15, attachment projection 61 protruding from an inner peripheral surface of tubular body 57 is provided at a lower part of the inner peripheral surface of tubular body 57. Attachment projection 61 extends in the circumferential direction of tubular body 57. Engaging recess 63 is provided on an outer surface of attachment projection 61. A plurality of (here, two) attachment projections 61 are provided in the circumferential direction of the inner peripheral surface of tubular body 57. The lengths of the plurality of attachment projections 61, 61 extending in the circumferential direction of tubular body 57 are different from each other. Attachment projection 61 constitutes attachment portion 65 that allows bottom wall 59 to be detachable from tubular body 57.

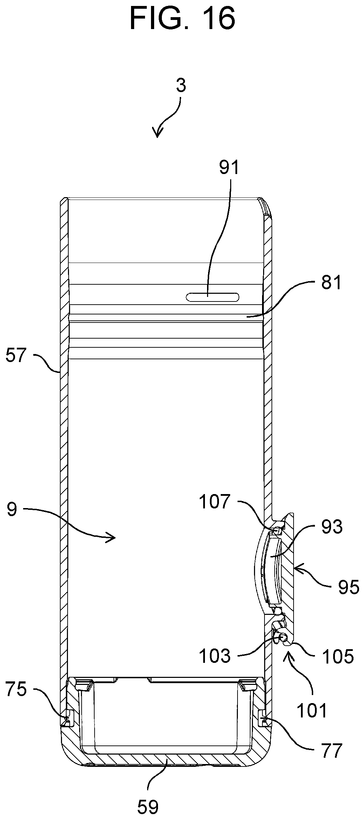

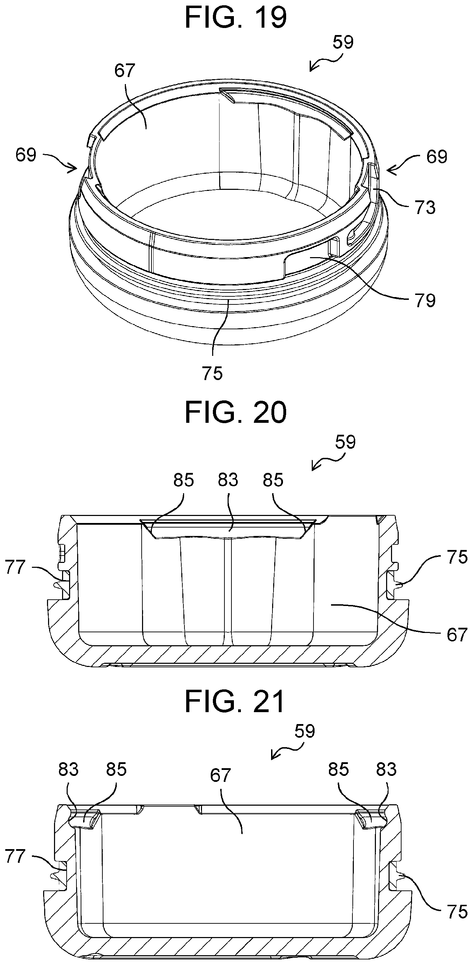

As illustrated in Fig. 16, bottom wall 59 constitutes a bottom wall of tank 3 that closes a lower opening of tubular body 57, and constitutes the storage unit 9 in a state of being attached to tubular body 57. As illustrated in Figs. 19 to 22, on the outer peripheral side of bottom wall 59, peripheral wall 67 that protrudes from the bottom surface toward tubular body 57 and is continuous in the circumferential direction is provided. The height of peripheral wall 67 is set such that user's finger reaches the bottom surface in a state where bottom wall 59 is removed from tubular body 57. Since tank 3 is transparent, peripheral wall 67 is preferably as low as possible such that a boundary line between tubular body 57 and bottom wall 59 is not noticeable when bottom wall 59 is attached to tubular body 57.

As illustrated in Figs. 15 and 19, attachment recess 69 is provided on an outer surface of peripheral wall 67 of bottom wall 59. An upper side of attachment recess 69 is opened, and one side in the circumferential direction of peripheral wall 67 is a bottom portion into which attachment projection 61 is inserted. Engagement projection 71 engageable with engagement recess 63 of attachment projection 61 is formed to protrude on a bottom side of attachment recess 69. Between an opening and a bottom of attachment recess 69, inclined surface 73 inclined upward from the bottom toward the opening is provided. A plurality of (here, two) attachment recesses 69 are provided in the circumferential direction of the outer peripheral surface of peripheral wall 67. The opening lengths of the openings of the plurality of attachment recesses 69, 69 with respect to the circumferential direction of peripheral wall 67 are different from each other. The opening lengths of the openings of the plurality of attachment recesses 69, 69 correspond to extending lengths of the plurality of attachment projections 61, 61 in the circumferential direction, respectively, such that the plurality of attachment projections 61, 61 can be inserted. Attachment recess 69 constitutes attachment projection 61 of tubular body 57 and attachment portion 65 that allows bottom wall 59 to be detachable from tubular body 57.

When bottom wall 59 is attached to tubular body 57, first, corresponding attachment projections 61, 61 are disposed with respect to the openings of attachment recesses 69, 69 in attachment portion 65. Next, tubular body 57 and bottom wall 59 are relatively moved in a direction approaching each other in the height direction so as to insert attachment projections 61, 61 into the openings of attachment recesses 69, 69. Then, in a state where attachment projections 61, 61 are inserted into attachment recesses 69, 69, tubular body 57 and bottom wall 59 are relatively rotated, and attachment projections 61, 61 are inserted into the bottoms of attachment recesses 69, 69. At this time, engagement recess 63 of attachment projection 61 and engagement projection 71 of attachment recess 69 are engaged with each other, and an attachment state of bottom wall 59 with respect to tubular body 57 is maintained.

When bottom wall 59 is removed from tubular body 57, first, tubular body 57 and bottom wall 59 are relatively rotated, and attachment projections 61, 61 are removed from bottoms of attachment recesses 69, 69 in attachment portion 65. At this time, the engagement between engagement recess 63 of attachment projection 61 and engagement projection 71 of attachment recess 69 is released. Next, the relative rotation between tubular body 57 and bottom wall 59 is continued, attachment projections 61, 61 are brought into contact with inclined surfaces 73, 73 of attachment recesses 69, 69, and the relative rotation between tubular body 57 and bottom wall 59 is further continued. At this time, attachment projections 61, 61 slide on inclined surfaces 73, 73 to relatively move tubular body 57 and bottom wall 59 in a direction of separating from each other in the height direction. Attachment projections 61, 61 that have finished sliding with inclined surfaces 73, 73 are disposed in the openings of attachment recesses 69, 69. Then, bottom wall 59 can be removed from tubular body 57 by relatively moving tubular body 57 and bottom wall 59 in the direction of separating in the height direction.

Such attachment portion 65 has a screw structure in which attachment projection 61 and attachment recess 69 mesh with each other. Therefore, by rotating bottom wall 59 about an axis of tubular body 57, bottom wall 59 can be attached to and detached from tubular body 57. In such attachment portion 65, extending lengths in the circumferential direction of the plurality of attachment projections 61, 61 are different from each other. Therefore, an attachment position of bottom wall 59 with respect to tubular body 57 can be positioned at one position in the circumferential direction. Note that the attachment position of bottom wall 59 can be positioned by providing attachment portion 65 at one position in the circumferential direction, but since there is a possibility that rattling of bottom wall 59 with respect to tubular body 57 increases, it is preferable to provide attachment portion 65 at a plurality of positions in the circumferential direction.

Here, in the conventional tank, tubular body 57 and bottom wall 59 are formed of one continuous member. For this reason, in the conventional tank, bottom wall 59 cannot be removed from tubular body 57, and a finger does not reach the bottom surface from the opening of the tank when cleaning the inner surface of the tank, and it is necessary to use a long cleaning brush or the like.

On the other hand, tank 3 includes tubular body 57 and bottom wall 59 detachably attached to tubular body 57 such that at least a part of the bottom wall can be opened. In such tank 3, bottom wall 59 is removed from tubular body 57 when cleaning the inside of tank 3. Since the finger reaches the inner bottom surface of bottom wall 59 detached from tubular body 57, it is not necessary to use a long cleaning brush or the like. Therefore, the inner bottom surface in tank 3 can be easily cleaned. Further, since peripheral wall 67 of bottom wall 59 is set to a height at which a finger can reach the bottom surface, the inside of tank 3 can be easily cleaned.

As illustrated in Figs. 15, 16, and 19 to 21, bottom packing 75 as a seal member is disposed between tubular body 57 and bottom wall 59. As illustrated in Figs. 16, 20, and 21, bottom packing 75 is attached in close contact with groove 77 formed continuously in the circumferential direction on the outer peripheral surface of peripheral wall 67 of bottom wall 59. Bottom packing 75 is detachable from groove 77. On an outer peripheral surface of bottom packing 75, a lip that is in close contact with the inner peripheral surface of tubular body 57 is formed continuously in the circumferential direction. Bottom packing 75 is in close contact with tubular body 57 and bottom wall 59 to seal a gap between tubular body 57 and bottom wall 59. Note that groove 77 may be provided on the inner peripheral surface of tubular body 57.

Here, in the conventional tank, a seal member such as bottom packing 75 is formed integrally with the tank, and the seal member cannot be removed unless a part of the tank is broken. In addition, when the seal member is disposed on a side of the bottom wall of the tank, it is difficult to clean the seal member, and dirt such as water stains and mold is likely to adhere to the seal member.

On the other hand, bottom packing 75 is detachably attached to groove 77 of bottom wall 59 detachably attached to tubular body 57. Therefore, when bottom packing 75 is removed from tank 3 at the time of cleaning or the like, bottom packing 75 can be easily removed from groove 77 of bottom wall 59 by removing bottom wall 59 from tubular body 57. In addition, since bottom packing 75 can be easily removed from tank 3, bottom packing 75 can be easily cleaned, and bottom packing 75 can be maintained in a clean state.

As illustrated in Figs. 15 and 19, an upper wall constituting groove 77 to which bottom packing 75 is attached is provided with notch 79 formed by cutting away so as to be separated from the outer peripheral surface of bottom packing 75. Notch 79 enables a finger to abut on the outer peripheral surface of bottom packing 75 by inserting the user's finger. Therefore, bottom packing 75 attached to groove 77 can be easily removed from groove 77. Note that a plurality of notches 79 may be provided in the circumferential direction of groove 77.

Here, as a configuration in which at least a part of the bottom wall of tank 3 is formed to be openable, for example, tank 3 may be configured by tubular body 57 and bottom wall 59, and detachable screw type attachment portion 65 may be provided between tubular body 57 and bottom wall 59. In this configuration, bottom wall 59 can be attached to tubular body 57 or bottom wall 59 can be removed from tubular body 57 by relatively rotating tubular body 57 and bottom wall 59. Note that, in this configuration, since tubular body 57 and bottom wall 59 are relatively rotated, it is necessary to form at least screw type attachment portion 65 as a cylinder. In addition, tank 3 may be configured by tubular body 57 and bottom wall 59, and for example, bottom wall 59 may be configured openably and closably with respect to tubular body 57 via attachment portion 65 including a hinge or the like. Furthermore, tank 3 may be configured by tubular body 57 and bottom wall 59, and for example, bottom wall 59 may be configured to be detachable from tubular body 57 via attachment portion 65 including a fitting portion or the like fitted by sliding in the height direction or a left-right direction.

Further, as another configuration, for example, tank 3 is configured by one continuous member of tubular body 57 and bottom wall 59, and an opening communicating with the inner bottom surface of bottom wall 59 is provided with respect to bottom wall 59, and a lid for closing the opening is provided. In this configuration, the opening of bottom wall 59 is preferably opened such that a finger can be inserted to clean the entire bottom surface inside bottom wall 59. It is preferable that the lid that closes the opening can hold a state in which the opening is closed, for example, by openably and closably providing the lid on bottom wall 59 via a hinge, providing an engaging portion engageable with bottom wall 59 at least at one place, or fitting the lid entirely to bottom wall 59.

Here, in the conventional tank, since tubular body 57 and bottom wall 59 are formed of one continuous member and at least a part of bottom wall 59 is not opened, water remaining in the tank cannot be discarded in a state where device body 5 is attached to the tank. Therefore, in the conventional tank, it is necessary to remove device body 5 from the tank when water remaining in the tank is discarded. In addition, when device body 5 is removed from the tank, water remaining in the tank may be splashed around the tank.

On the other hand, tank 3 is formed such that at least a part of the bottom wall can be opened. Therefore, when water remaining in tank 3 is discarded, the water can be discarded from the opening, and it is not necessary to remove device body 5 from tank 3. In addition, since the water remaining in tank 3 can be discarded without removing device body 5 from tank 3, it is possible to suppress the water remaining in tank 3 from splashing around. Therefore, it is possible to reduce a burden of cleaning the periphery of tank telescopic oral cavity washing device 1 after use.

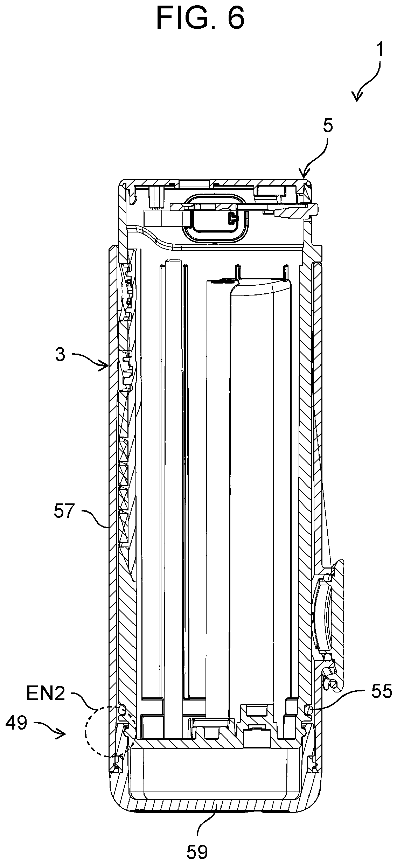

Device body 5 is supported by such tank 3 so as to be slidable in the height direction. As illustrated in Figs. 2, 4, and 10, when tank telescopic oral cavity washing device 1 is used, device body 5 is pulled out from tank 3. Device body 5 is held in a pull-out state pulled out from tank 3 by holding portion 45. On the other hand, as representatively illustrated in Figs. 3 and 6, when use of tank telescopic oral cavity washing device 1 is finished, device body 5 is accommodated in tank 3. An accommodated state of device body 5 accommodated in tank 3 is held by lock portion 49.

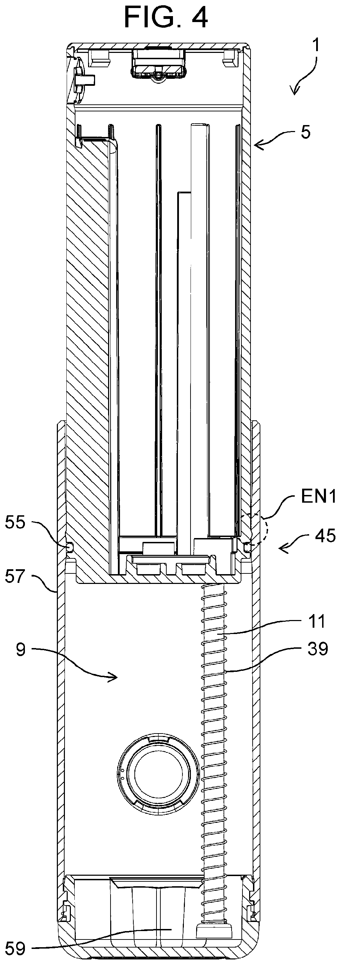

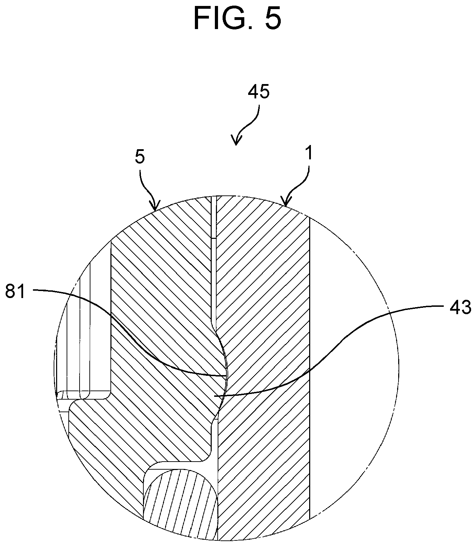

As illustrated in Figs. 4 and 5, holding portion 45 includes pull-out projection 43 of device body 5, and pull-out recess 81 provided in tank 3 engageable with pull-out projection 43. Pull-out recess 81 is also illustrated in Fig. 16. Pull-out recess 81 is provided at an upper part of the inner peripheral surface of tubular body 57 of tank 3 so as to be engageable with pull-out projection 43 of device body 5. Pull-out recess 81 is formed continuously in the circumferential direction of tubular body 57 so as to be engageable with the plurality of pull-out projections 43, 43.

When device body 5 is pulled out from tank 3, pull-out projection 43 and pull-out recess 81 are engaged with each other, and holding portion 45 holds device body 5 at a pull-out position with respect to tank 3. Note that by pulling out device body 5 from the pull-out position of tank 3, the engagement of holding portion 45 is released, and device body 5 can be detached from tank 3. In such holding portion 45, pull-out projection 43 is provided at a position where tank 3 overlaps with pull-out projection 43 in a front view in a state where device body 5 is attached to tank 3. Therefore, in the state where device body 5 is attached to tank 3, pull-out projection 43 is not exposed from tank 3 in a front view, and unnecessary unevenness can be hidden, so that designability can be improved.

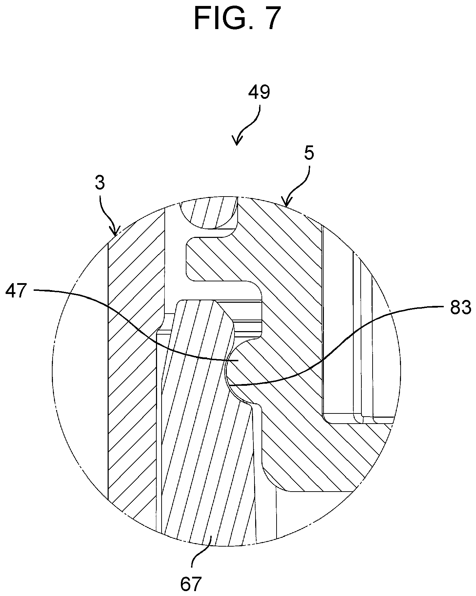

As illustrated in Figs. 6 and 7, lock portion 49 includes accommodating projection 47 of device body 5, and accommodating recess 83 provided in tank 3 engageable with accommodating projection 47. Accommodating recess 83 is also illustrated in Figs. 20 and 21. Accommodating recess 83 is provided on the inner peripheral surface of peripheral wall 67 of bottom wall 59 of tank 3 so as to be engageable with accommodating projection 47 of device body 5. Accommodating recess 83 extends in the circumferential direction of peripheral wall 67. The extension length in the circumferential direction of accommodating recess 83 is set to be longer than the extension length in the circumferential direction of accommodating projection 47. A plurality of (here, two) accommodating recesses 83 are provided in the circumferential direction of the inner peripheral surface of peripheral wall 67 so as to be engageable with the plurality of accommodating projections 47, 47. Inclined surfaces 85, 85 inclined upward from the lower side to the upper side are provided on both sides in the circumferential direction of accommodating recess 83.

When device body 5 is accommodated in tank 3, in such lock portion 49, accommodating projection 47 and accommodating recess 83 are engaged with each other to hold device body 5 at an accommodating position with respect to tank 3. Note that, at this time, although not illustrated, tube 11 is accommodated between device body 5 and tank 3 in a state of being wound a plurality of times. Lower packing 55 is disposed above accommodating projection 47. By disposing lower packing 55 above accommodating projection 47, lower packing 55 does not interfere with accommodating recess 83 when device body 5 is accommodated in tank 3 or when device body 5 is pulled out from tank 3, and wear of lower packing 55 can be reduced.

Conventionally, when device body 5 held by lock portion 49 is pulled out from tank 3, device body 5 is gripped and pulled out from tank 3 to disengage lock portion 49. However, for example, when water or the like adheres to device body 5, device body 5 may slip, and device body 5 may not be pulled out from tank 3. In such a case, it is difficult to release the engagement of lock portion 49.

Therefore, as illustrated in Figs. 20 and 21, accommodating recess 83 of lock portion 49 is provided with inclined surfaces 85, 85 on both sides in the circumferential direction of peripheral wall 67, that is, on both sides in a relative rotation direction between device body 5 and tank 3. Therefore, by relatively rotating device body 5 and tank 3, accommodating projection 47 and inclined surface 85 are brought into contact with each other, and accommodating projection 47 moves while sliding along inclined surface 85. When accommodating projection 47 moves along inclined surface 85, device body 5 is moved upward to come out of tank 3. When device body 5 moves upward, the engagement between accommodating projection 47 and accommodating recess 83 is released at lock portion 49. In a state where the engagement of lock portion 49 is released, device body 5 can be easily pulled out from tank 3.

In such lock portion 49, even when device body 5 slides, the engagement of lock portion 49 can be easily released by relatively rotating device body 5 and tank 3. Therefore, device body 5 can be easily pulled out from tank 3. In the state in which the engagement of lock portion 49 is released, accommodating projection 47 moves along inclined surface 85, so that device body 5 is moved in a direction in which device body 5 is pulled out from tank 3. Therefore, an area for gripping device body 5 is increased, and device body 5 can be more easily pulled out from tank 3.

Note that, as the lock portion that can release the engagement by relatively rotating device body 5 and tank 3, for example, inclined surfaces 85, 85 may not be provided on both sides in the circumferential direction of accommodating recess 83. In this case, by relatively rotating device body 5 and tank 3, engagement projection 71 is positioned outside a range of accommodating recess 83, so that the engagement of the lock portion is released. Even with such a lock portion, device body 5 can be easily pulled out from tank 3.

Accommodating projection 47 constituting such lock portion 49 is provided on the side surface of device body 5 at a position where tank 3 overlaps with accommodating projection 47 in a front view when device body 5 is pulled out from tank 3. Therefore, as illustrated in Fig. 2, in the state where device body 5 is pulled out from tank 3, accommodating projection 47 is not exposed from tank 3 in a front view, and unnecessary unevenness can be hidden, so that designability can be improved.

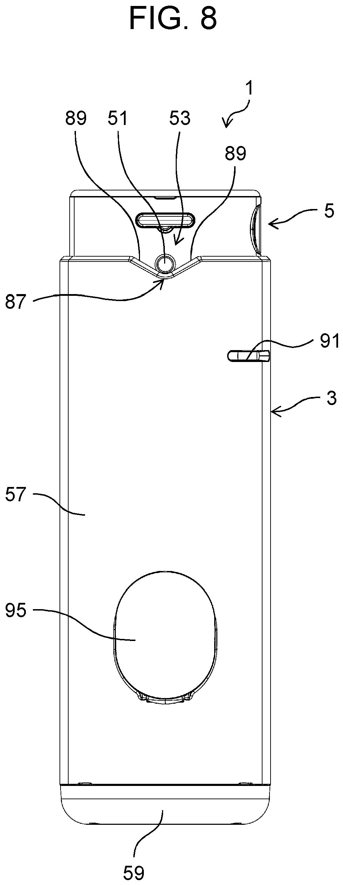

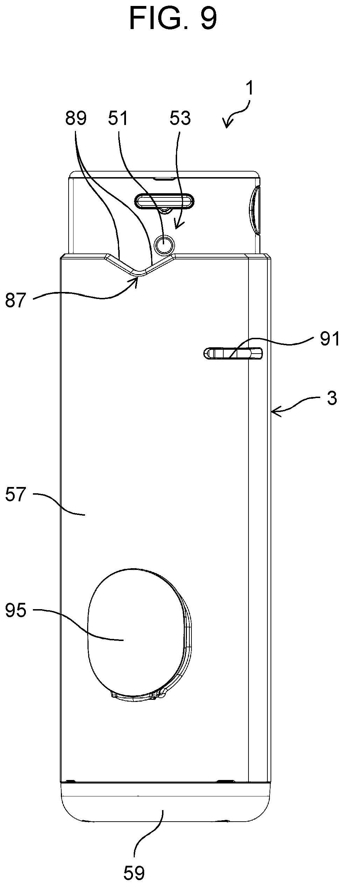

Such lock portion 49 is provided inside tank 3, and even if tank 3 is formed to be transparent, it is difficult to see engagement or disengagement. Therefore, as illustrated in Figs. 8 and 9, marking portion 53 that serves as a guide of the engagement state of lock portion 49 is provided in a portion visible from the outside of tank 3.

As illustrated in Figs. 8 and 9, marking portion 53 includes marking projection 51 of device body 5, and marking recess 87 provided in tank 3 engageable with marking projection 51. Marking recess 87 is provided at an upper opening edge of tubular body 57 of tank 3 so as to be engageable with marking projection 51. Marking recess 87 has a bottom portion engaging with marking projection 51, and is provided with inclined surfaces 89, 89 inclined upward on both sides in the circumferential direction from the bottom portion.

When marking projection 51 of device body 5 is engaged with the bottom portion of marking recess 87 of tank 3, marking portion 53 indicates that accommodating projection 47 and accommodating recess 83 are engaged with each other in lock portion 49. Therefore, the user can recognize that lock portion 49 is engaged by visually recognizing the engagement between marking projection 51 and marking recess 87.

When device body 5 and tank 3 are relatively rotated, marking portion 53 moves while marking projection 51 slides along inclined surface 89. When marking projection 51 moves along inclined surface 89, device body 5 is moved upward to come out of tank 3. Therefore, it is possible to assist disengagement of lock portion 49. When marking projection 51 finishes the movement of inclined surface 89, as illustrated in Fig. 9, it can be seen that marking projection 51 is disposed at an opening edge of tubular body 57, and that the engagement between accommodating projection 47 and accommodating recess 83 is released at lock portion 49. Therefore, the user can recognize that the engagement of lock portion 49 is released by visually recognizing the release of the engagement between marking projection 51 and marking recess 87.

Here, as illustrated in Figs. 8 to 10, drying hole 91 penetrating a peripheral wall of tubular body 57 is provided at an upper part of a side surface of tubular body 57 of tank 3. Drying hole 91 is disposed to face nozzle accommodating portion 41 of device body 5 in the state where device body 5 is accommodated in tank 3. By providing drying hole 91 in tank 3 in this manner, nozzle 7 accommodated in nozzle accommodating portion 41 can be dried. Drying hole 91 is disposed to face a bottom wall side of nozzle accommodating portion 41 of device body 5 in the state where device body 5 is pulled out from tank 3. By disposing drying hole 91 in this manner, the water accumulated in nozzle accommodating portion 41 can be discharged from drying hole 91.

In tank telescopic oral cavity washing device 1, tank 3 is constructed with tubular body 57 and detachable bottom wall 59, so that bottom wall 59 can be removed to supply water to storage unit 9 in tank 3. However, for example, when water is poured in a wash basin or the like, there is no problem as long as it is a water supply port of a type that can be expanded like a shower type or the like, but in a water supply port of a type that cannot be expanded, it may be difficult to supply water in a state where tank 3 from which bottom wall 59 has been removed is vertical. Therefore, it is preferable that water can be supplied to storage unit 9 in tank 3 even in a state where tank 3 is laid down.

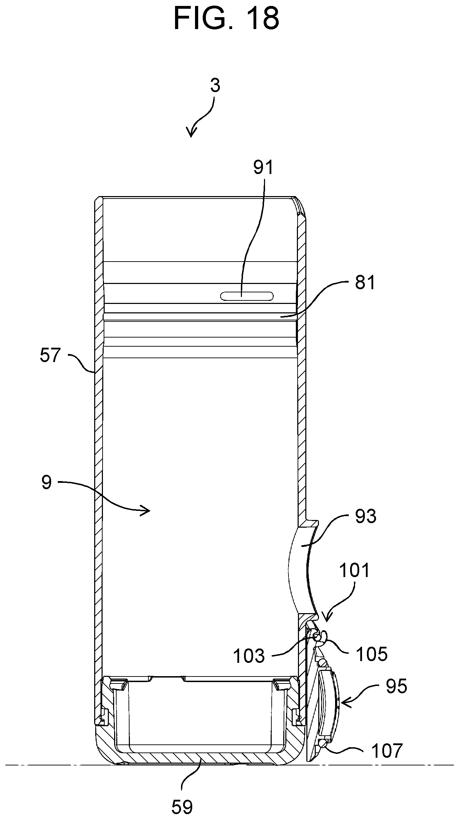

Therefore, as illustrated in Figs. 16 to 18, liquid supply hole 93 through which water is injected into storage unit 9 is formed in the side surface of tank 3. As illustrated in Figs. 16 and 18, liquid supply hole 93 is formed in a tubular shape protruding from the side surface of tank 3. Liquid supply hole 93 is disposed so as to be positioned below lower packing 55 in the state where device body 5 is pulled out from tank 3. Furthermore, liquid supply hole 93 is disposed so as to be positioned above lower packing 55 in the state where device body 5 is accommodated in tank 3. By disposing liquid supply hole 93 in this manner, liquid supply hole 93 does not interfere with lower packing 55, and the sealability of lower packing 55 can be maintained. As illustrated in Figs. 8 to 10, liquid supply hole 93 is closed by liquid supply lid 95.

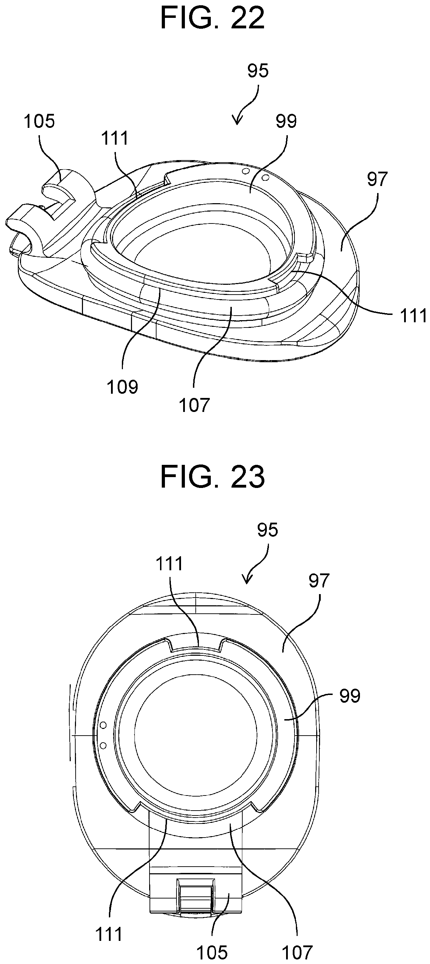

As illustrated in Figs. 22 and 23, liquid supply lid 95 is provided with closing portion 97 having an outer diameter larger than an outer diameter of liquid supply hole 93. The contour of closing portion 97 is formed such that both sides in a vertical direction are formed by curved surfaces, and both sides in a horizontal direction are formed as straight track ellipses. An outer surface of closing portion 97 is curved along a side surface shape of tank 3. By forming closing portion 97 in this manner, designability can be enhanced. On an inner surface of closing portion 97, peripheral wall 99 that protrudes toward liquid supply hole 93 and can be inserted into an inner periphery of liquid supply hole 93 is formed continuously in the circumferential direction. As illustrated in Figs. 16 to 18, liquid supply lid 95 is attached to tank 3 openably and closably in the vertical direction via hinge 101. For example, liquid supply lid 95 may be provided openably and closably in a left-right direction with respect to tank 3 via hinge 101, and an opening and closing direction of liquid supply lid 95 may be any direction.

As illustrated in Figs. 16 and 18, hinge 101 includes shaft 103 provided in tank 3, and hook 105 provided in liquid supply lid 95 rotatably engaged with shaft 103. Hook 105 is also illustrated in Figs. 22 and 23. Since hinge 101 includes shaft 103 and hook 105, liquid supply lid 95 can be detachable from tank 3. Therefore, only liquid supply lid 95 can be cleaned. Note that hook 105 may be provided in tank 3, and shaft 103 may be provided in liquid supply lid 95 to form hinge 101. Further, the hinge may be formed continuously with tank 3 and liquid supply lid 95.

As illustrated in Figs. 16 to 18, hinge 101 is provided at a position entirely hidden by closing portion 97 of liquid supply lid 95 in a front view. By hiding hinge 101 with liquid supply lid 95, hinge 101 can be protected, and breakage of hinge 101 can be suppressed. In addition, it is possible to increase the strength of hook 105 and improve the strength of hinge 101 without providing hook 105 at an end of liquid supply lid 95. Note that at least a part of hinge 101 may be hidden by liquid supply lid 95 in a front view. In addition, when hinge 101 has high strength, hinge 101 may not be hidden by liquid supply lid 95. Hinge 101 is disposed at a position that is not touched by a user's finger when the user grips bottom wall 59 and attaches and detaches bottom wall 59 to and from tubular body 57. By disposing hinge 101 in this manner, bottom wall 59 can be easily attached to and detached from tubular body 57 without interfering with hinge 101.

As illustrated in Figs. 16 and 18, liquid supply packing 107 as a seal member is disposed between liquid supply hole 93 and liquid supply lid 95. As illustrated in Fig. 22, liquid supply packing 107 is attached in close contact with groove 109 formed continuously in the circumferential direction on the outer peripheral surface of peripheral wall 99 of liquid supply lid 95. Liquid supply packing 107 is detachable from groove 109. An outer peripheral surface of liquid supply packing 107 is in close contact with the inner peripheral surface of liquid supply hole 93 in a state where liquid supply hole 93 is closed by liquid supply lid 95. Liquid supply packing 107 is in close contact with liquid supply hole 93 and liquid supply lid 95 to seal a gap between liquid supply hole 93 and liquid supply lid 95. Note that groove 109 may be provided on the inner peripheral surface of liquid supply hole 93.

An upper wall portion constituting groove 109 to which liquid supply packing 107 is attached is provided with notch 111 formed by cutting away so as to be separated from the outer peripheral surface of liquid supply packing 107. A plurality of (here, two) notches 111 are provided in the circumferential direction of groove 109. Notch 111 may be provided at one location in the circumferential direction of groove 109. Notch 111 enables a finger to abut on the outer peripheral surface of liquid supply packing 107 by inserting the finger of the user. Therefore, liquid supply packing 107 attached to groove 109 can be easily removed from groove 109.

Herein, conventionally, when liquid supply lid 95 is opened with respect to liquid supply hole 93, the end portion of liquid supply lid 95 protrudes from the side surface of tank 3 in a front view. Therefore, for example, when tank 3 is dropped in a state where liquid supply lid 95 is opened, a protruding end portion of liquid supply lid 95 collides with a peripheral member, and hinge 101 holding liquid supply lid 95 may be damaged.

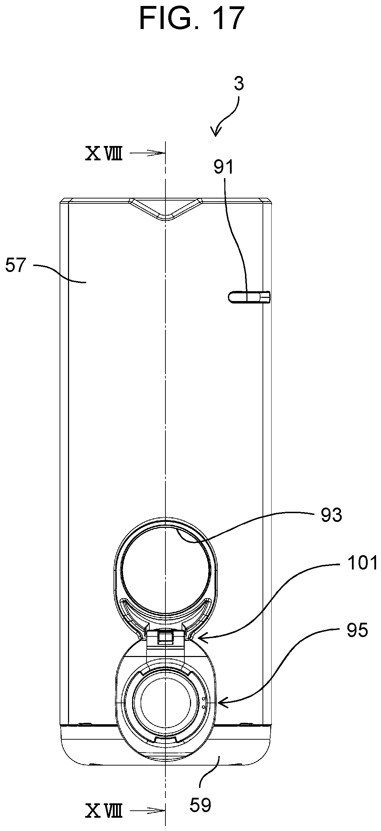

On the other hand, as illustrated in Figs. 17 and 18, the end portion of liquid supply lid 95 is disposed within a range along the side surface of tank 3 in a front view in a state where liquid supply lid 95 is opened. Specifically, the end portion of liquid supply lid 95 on a side opposite to hinge 101 is disposed at a position not protruding from a lower end of the side surface of tank 3 in a front view in a state where liquid supply lid 95 is opened. Therefore, it is possible to suppress interference of the end portion of liquid supply lid 95 with the peripheral member in the state where liquid supply lid 95 is opened, and it is possible to suppress the influence on hinge 101. As described above, the end portion of liquid supply lid 95 is an end portion located on the side opposite to hinge 101 in the state where liquid supply lid 95 is opened. Therefore, the end portion of liquid supply lid 95 that most affects hinge 101 is not exposed from the side surface of tank 3, and the influence on hinge 101 can be suppressed.

In such tank telescopic oral cavity washing device 1, liquid supply hole 93 through which liquid is injected into storage unit 9 is formed in tank 3. Furthermore, liquid supply hole 93 is closed by liquid supply lid 95 with which tank 3 is openably and closably provided via hinge 101. The end portion of liquid supply lid 95 is disposed within the range of the side surface of tank 3 in a front view in the state where liquid supply lid 95 is opened. Therefore, it is possible to suppress interference of the end portion of liquid supply lid 95 with the peripheral member in the state where liquid supply lid 95 is opened, and it is possible to suppress the influence on hinge 101.

Therefore, in such tank telescopic oral cavity washing device 1, it is possible to suppress breakage of hinge 101 holding liquid supply lid 95.

Furthermore, at least a part of hinge 101 is hidden by liquid supply lid 95 in a front view. Therefore, breakage of hinge 101 can be further suppressed.

Entire hinge 101 is hidden by liquid supply lid 95 in a front view. Therefore, breakage of hinge 101 can be further suppressed.

Further, liquid supply packing 107 as a sealing member for sealing a gap between liquid supply hole 93 and liquid supply lid 95 is detachably attached between liquid supply hole 93 and liquid supply lid 95. Furthermore, liquid supply lid 95 is provided with groove 109 for holding liquid supply packing 107. In groove 109, notch 111 separated from the outer peripheral surface of liquid supply packing 107 is formed. Therefore, liquid supply packing 107 can be easily removed.

Furthermore, tank 3 includes tubular body 57 and bottom wall 59 detachably attached to tubular body 57. Therefore, since bottom wall 59 can be separated from tubular body 57, the inside of tank 3 can be easily cleaned. In addition, by removing bottom wall 59 from tubular body 57, the liquid remaining in tank 3 can be discarded without removing device body 5 from tank 3.

The present disclosure is applicable to a product provided with a liquid supply lid that closes a liquid supply hole through which liquid is injected into a tank and is openably and closably provided via a hinge.

## Claims

1. A tank telescopic oral cavity washing device (1), comprising:
a device body (5) that a pump (15) is built in; and
a tank (3) that comprises a storage unit (9), the tank (3) being capable of accommodating the device body (5) in the storage unit (9) so as to slidably support the device body (5), wherein
a liquid supply hole (93) through which liquid is injected into the storage unit (9) is formed in the tank (3),
the liquid supply hole (93) is closed by a liquid supply lid (95) with which the tank (3) is openably and closably provided via a hinge (101), **characterized in that**
in a state where the liquid supply lid (95) is opened, an end portion of the liquid supply lid (95) provided opposite to the hinge (101) is disposed within a range along a side surface of the tank (3) in a front view, such that it does not protrude from a lower end of the side surface of tank (3).

2. The tank telescopic oral cavity washing device (1) according to Claim 1, wherein at least a part of the hinge (101) is hidden by the liquid supply lid (95) in the front view.

3. The tank telescopic oral cavity washing device (1) according to Claim 2, wherein an entirety of the hinge (101) is hidden by the liquid supply lid (95) in the front view.

4. The tank telescopic oral cavity washing device (1) according to any one of Claims 1 to 3, wherein
a seal member (107) that seals a gap between the liquid supply hole (93) and the liquid supply lid (95) is detachably attached between the liquid supply hole (93) and the liquid supply lid (95),
either one of the liquid supply hole (93) and the liquid supply lid (95) is provided with a groove (109) that holds the seal member (107), and
a notch (111) is formed in the groove (109), the notch (111) being separated from an outer peripheral surface of the seal member (107).

5. The tank telescopic oral cavity washing device (1) according to any one of Claims 1 to 4, wherein the tank (3) comprises a tubular body (57), and a bottom wall (59) detachably attached to the tubular body (57).

## Patentansprüche

1. Teleskopische Mundhöhlenspülvorrichtung (1) mit Behälter, umfassend:
einen Vorrichtungskörper (5), in den eine Pumpe (15) eingebaut ist; und
einen Behälter (3), der eine Aufbewahrungseinheit (9) umfasst, wobei der Behälter (3) in der Lage ist, den Vorrichtungskörper (5) in der Aufbewahrungseinheit (9) aufzunehmen, um den Vorrichtungskörper (5) verschiebbar zu stützen, wobei
ein Flüssigkeitszuführungsloch (93), durch das Flüssigkeit in die Aufbewahrungseinheit (9) eingespritzt wird, in dem Behälter (3) ausgebildet ist,
das Flüssigkeitszuführungsloch (93) durch einen Flüssigkeitszuführungsdeckel (95) verschlossen ist, der mit dem Behälter (3) über ein Scharnier (101) öffenbar und schließbar ausgebildet ist,
**dadurch gekennzeichnet, dass**
in einem Zustand, in dem der Flüssigkeitszuführungsdeckel (95) geöffnet ist, ein Endabschnitt des Flüssigkeitszuführungsdeckels (95), der gegenüber dem Scharnier (101) vorgesehen ist, innerhalb eines Bereichs entlang einer seitlichen Oberfläche des Behälters (3) in einer Vorderansicht angeordnet ist, so dass er nicht von einem unteren Ende der seitlichen Oberfläche des Behälters (3) vorsteht.

2. Teleskopische Mundhöhlenspülvorrichtung (1) mit Behälter gemäß Anspruch 1, wobei zumindest ein Abschnitt des Scharniers (101) in der Vorderansicht durch den Flüssigkeitszuführungsdeckel (95) verdeckt ist.

3. Teleskopische Mundhöhlenspülvorrichtung (1) mit Behälter gemäß Anspruch 2, wobei das gesamte Scharnier (101) in der Vorderansicht durch den Flüssigkeitszuführungsdeckel (95) verdeckt ist.

4. Teleskopische Mundhöhlenspülvorrichtung (1) mit Behälter gemäß einem der Ansprüche 1 bis 3, wobei
ein Dichtungselement (107), das einen Spalt zwischen dem Flüssigkeitszuführungsloch (93) und dem Flüssigkeitszuführungsdeckel (95) abdichtet, lösbar zwischen dem Flüssigkeitszuführungsloch (93) und dem Flüssigkeitszuführungsdeckel (95) befestigt ist,
entweder das Flüssigkeitszuführungsloch (93) oder der Flüssigkeitszuführungsdeckel (95) mit einer Nut (109) ausgebildet ist, die das Dichtungselement (107) hält, und
eine Kerbe (111) in der Nut (109) ausgebildet ist, wobei die Kerbe (111) von einer Außenumfangsfläche des Dichtungselements (107) getrennt ist.

5. Teleskopische Mundhöhlenspülvorrichtung (1) mit Behälter gemäß einem der Ansprüche 1 bis 4, wobei der Behälter (3) einen rohrförmigen Körper (57) und eine Bodenwand (59) umfasst, die abnehmbar an dem rohrförmigen Körper (57) befestigt ist.

## Revendications

1. Dispositif à cuve, télescopique, de lavage de la cavité buccale (1), comprenant :
un corps de dispositif (5) dans lequel une pompe (15) est construite ; et
une cuve (3) qui comprend une unité de stockage (9), la cuve (3) étant capable de loger le corps de dispositif (5) dans l'unité de stockage (9) afin de supporter de manière à pouvoir coulisser le corps de dispositif (5),
un trou d'alimentation de liquide (93) à travers lequel du liquide est injecté dans l'unité de stockage (9) étant formé dans la cuve (3),
le trou d'alimentation de liquide (93) étant fermé par un couvercle d'alimentation de liquide (95) avec lequel la cuve (3) est fournie de manière à pouvoir être ouverte et fermée par l'intermédiaire d'une articulation (101),
**caractérisé en ce que** dans un état où le couvercle d'alimentation de liquide (95) est ouvert, une portion d'extrémité du couvercle d'alimentation de liquide (95) prévue à l'opposé de l'articulation (101) est disposée à l'intérieur d'une plage le long d'une surface latérale de la cuve (3) en une vue de face, de sorte qu'elle ne fait pas saillie depuis une extrémité inférieure de la surface latérale de la cuve (3).

2. Dispositif à cuve, télescopique, de lavage de la cavité buccale (1) selon la revendication 1, au moins une partie de l'articulation (101) étant cachée par le couvercle d'alimentation de liquide (95) dans la vue de face.

3. Dispositif à cuve, télescopique, de lavage de la cavité buccale (1) selon la revendication 2, une intégralité de l'articulation (101) étant cachée par le couvercle d'alimentation de liquide (95) dans la vue de face.

4. Dispositif à cuve, télescopique, de lavage de la cavité buccale (1) selon l'une quelconque des revendications 1 à 3,
un élément d'étanchéité (107) qui scelle un espace entre le trou d'alimentation de liquide (93) et le couvercle d'alimentation de liquide (95) étant fixé de manière à pouvoir être détaché entre le trou d'alimentation de liquide (93) et le couvercle d'alimentation de liquide (95),
soit l'un du trou d'alimentation de liquide (93) et du couvercle d'alimentation de liquide (95) étant pourvu d'une rainure (109) qui retient l'élément d'étanchéité (107), et
une encoche (111) étant formée dans la rainure (109), l'encoche (111) étant séparée d'une surface périphérique externe de l'élément d'étanchéité (107).

5. Dispositif à cuve, télescopique, de lavage de la cavité buccale (1) selon l'une quelconque des revendications 1 à 4, la cuve (3) comprenant un corps tubulaire (57), et une paroi inférieure (59) fixée, de manière à pouvoir être détachée, au corps tubulaire (57).
